# EUROPÄISCHE PATENTANMELDUNG

(11) **EP 2 105 348 A2**
(43) Veröffentlichungstag der Anmeldung: **30.09.2009**
(21) Anmeldenummer: 09003093.3
(22) Anmeldetag: 04.03.2009
(51) Int. Cl.: B60N 2/50

(54) **Fahrzeugsitz, insbesondere Nutzfahrzeugsitz**

(30) Priorität: 26.03.2008 DE 102008015614
(71) Anmelder: KEIPER GmbH & Co. KG, 67657 Kaiserslautern (DE)
(72) Erfinder: Weber, Thomas, 67659 Kaiserslautern (DE); Nieroba, Christof, 67663 Kaiserslautern (DE); Klein, Harald, 74405 Ottendorf (DE); Hippel, Daniel, 67722 Winnweiler (DE)
(74) Vertreter: Patentanwälte Hosenthien-Held und Dr. Held

(57) **Zusammenfassung**

Bei einem Fahrzeugsitz, insbesondere Nutzfahrzeugsitz, mit einem schwingfähigen Scherengestell (3), das eine Feder (12), einen Dämpfer (14), welcher an zwei relativ zueinander beweglichen Teilen des Scherengestells (3) angebunden ist, und auf seinen beiden Längsseiten je ein Paar von Schwingen (8), welche sich an einer in Sitzquerrichtung (y) verlaufenden Scherenachse (10) kreuzen, aufweist, ist der Dämpfer (14) kinetisch gelagert.

## Beschreibung

Die Erfindung betrifft einen Fahrzeugsitz, insbesondere Nutzfahrzeugsitz, mit den Merkmalen des Oberbegriffs des Anspruches 1.

Bekannte Fahrzeugsitze dieser Art sind beispielsweise in der DE 197 05 010 B4 oder der DE 32 29 371 A1 beschrieben. Die Schwingfähigkeit steigert den Sitzkomfort, da Fahrbahnunebenheiten weitgehend abgefangen und ausgeglichen werden. Der Dämpfer dient dazu, aufgenommene Schwingungen zu dämpfen.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Eine kinetische Lagerung des Dämpfers, beispielsweise mittels eines Kugelgelenks, vorzugsweise beidseitig je eines Kugelgelenks, hat den Vorteil, dass in den Anbindungsstellen (kinetischen Lagerstellen) des Dämpfers ein Winkelausgleich möglich ist, was zu einem gleichmäßigen Schwingungsverhalten führt, während eine beliebige, starre Anbindung des Dämpfers zu Querkräfte und Torsionsmomente zwischen dem Dämpfer und den anderen Teilen des schwingfähigen Scherengestells und damit zu einem ungleichen Schwingungsverhalten der beiden Fahrzeugsitzseiten führen kann.

Indem der Dämpfer in Sitzquerrichtung mittig zwischen den beiden Längsseiten des Scherengestells angeordnet und und ebenso mittig an den beiden Teilen des Scherengestells angebunden ist, werden Kräfte und Momente gleichmäßig und symmetrisch bezüglich einer Mittelebene zwischen der beiden Längsseiten übertragen. Dies trägt ebenfalls zu einem gleichmäßigen Schwingungsverhalten bei, während eine beliebige, unsymmetrische Anordnung und Anbindung des Dämpfers zu einer unsymmetrischen Übertragung der Kräfte und Momente zwischen dem Dämpfer und den anderen Teilen des schwingfähigen Scherengestells führt.

Die Anbindung, vorzugsweise eine Anlenkung, des Dämpfers kann beispielsweise an der Scherenachse, an Quertraversen der Schwingen oder an Rahmen des Scherengestells erfolgen.

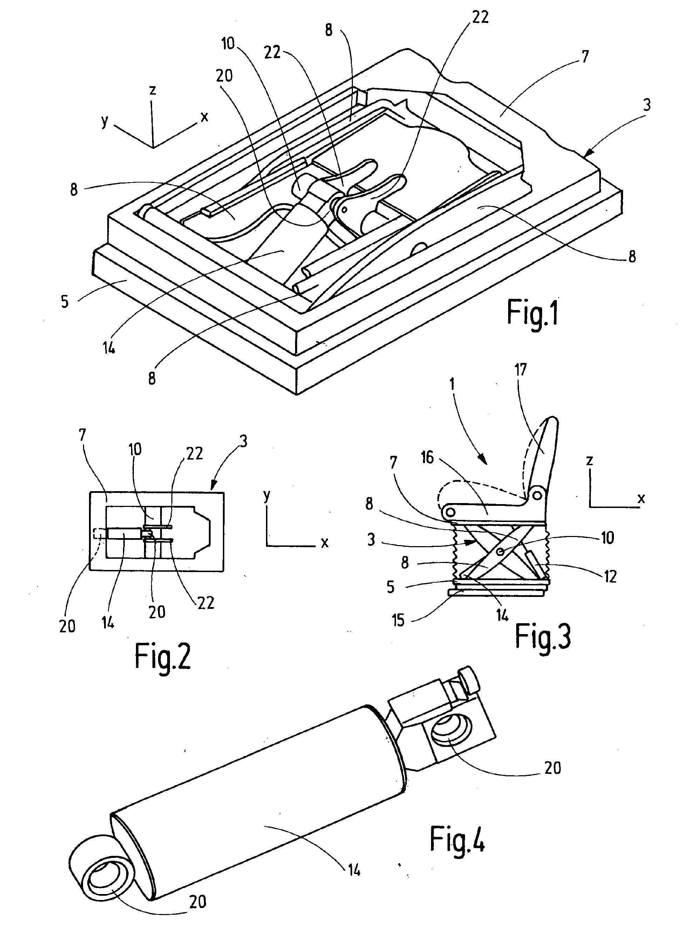

Im folgenden ist die Erfindung anhand eines in der Zeichnung dargestellten Ausführungsbeispiels näher erläutert. Es zeigen
- Fig. 1: eine perspektivische Ansicht des Scherengestells des Ausführungsbeispiels,
- Fig. 2: eine schematische Draufsicht auf das Scherengestell,
- Fig. 3: eine schematische Seitenansicht des Ausführungsbeispiels, und
- Fig. 4: eine perspektivische Ansicht des Dämpfers.

Ein Fahrzeugsitz 1 für ein Nutzfahrzeug oder ein anderes Kraftfahrzeug weist ein Scherengestell 3 auf, welches einen Unterrahmen 5, einen oberhalb desselben angeordneten Oberrahmen 7 und beidseitig je ein Paar gekreuzter Schwingen 8 umfasst. Eine Scherenachse 10 verbindet die beiden Kreuzungspunkte und definiert zugleich die Achse, um welche die Schwingen 8 relativ zueinander schwenken können. Die Schwingen 8 sind jeweils an ihrem hinteren Ende am Unterrahmen 5 bzw. am Oberrahmen 7 angelenkt und weisen jeweils an ihrem vorderen Ende drehbare Rollen auf, mittels denen sie im oder am Oberrahmen 7 bzw. Unterrahmen 5 in Sitzlängsrichtung x beweglich geführt sind. Durch diese Bewegung der Schwingen 8 ändert sich die Höhe des Oberrahmens 7 über dem Unterrahmen 5, im folgenden kurz als Höhe des Scherengestells 3 bezeichnet. Mittels einer Feder 12, beispielsweise einer Gasfeder, und eines Dämpfers 14 wird das Scherengestell 3 ein schwingfähiges System, welches den Sitzkomfort erhöht. Die Schwingungsrichtung des Scherengestells 3, welche im Idealfall der Vertikalen entspricht, sei mit z bezeichnet.

Das Scherengestell 3 ist vorliegend mittels Sitzschienen 15 in Sitzlängsrichtung x verschiebbar, womit der Fahrzeugsitz 1 längseinstellbar ist, d.h. seine Sitzlängsposition einstellbar ist. Der Fahrzeugsitz 1 weist ferner einen Sitzrahmen 16 auf, welcher einerseits in seinem hinteren Bereich am Oberrahmen 7 beidseitig angelenkt ist und andererseits in seinem vorderen Bereich mittels eines Neigungseinstellers anhebbar und absenkbar und damit in seiner Neigung relativ zum Scherengestell 3 einstellbar ist. Schließlich weist der Fahrzeugsitz 1 noch eine Lehne 17 auf, welche am Sitzrahmen 16 (oder alternativ am Oberrahmen 7) - vorliegend neigungseinstellbar - angebracht ist.

Der Dämpfer 14 weist an beiden Enden je ein Kugelgelenk 20 auf. Mittels dieser Kugelgelenke 20 ist der Dämpfer 14 am Scherengestell 3 angelenkt und damit kinetisch gelagert. Der Dämpfer 14 erfährt also keine Querkräfte, Torsionen o.ä. des Scherengestells 3, weil die Kugelgelenk 20 einen Winkelausgleich vornehmen und nur die Zug- und Druckkräfte an den Dämpfer 14 weitergeben. Die Sitzquerrichtung y ist die Richtung senkrecht zur Sitzlängsrichtung x und zur Schwingungsrichtung z des Scherengestells 3, also die Richtung des Scherenachse 10. Bezüglich der Sitzquerrichtung y ist der Dämpfer 14 mittig zwischen den beiden Längsseiten des Scherengestells 3 angeordnet, also mittig zwischen den in Sitzlängsrichtung x verlaufenden Schenkeln von Unterrahmen 5 und Oberrahmen 7 und ebenso mittig zwischen den beiden Paaren gekreuzter Schwingen 8. Damit wirkt der Dämpfer 14 symmetrisch auf die Schwingungen des Scherengestells 3 ein.

Der Dämpfer 14 kann grundsätzlich zwischen zwei beliebigen, relativ zu einander beweglichen Teilen des Scherengestells 3 angeordnet und daran angelenkt sein. Aus Bauraumgründen, und um große Amplituden zu erfassen, sind bestimmte, insbesondere schräge Anordnungen bevorzugt. Vorliegend ist der Dämpfer 14 an seinem unteren Ende mittels des dortigen Kugelgelenks 20 am Unterrahmen 5 angelenkt, genauer gesagt mittig an dem in Sitzquerrichtung y verlaufenden Schenkel. An seinem oberen Ende ist der Dämpfer 14 mittels des dortigen Kugelgelenks 20 an einem Paar von Reitern 22 angelenkt, die auf der als Rohr ausgebildeten Scherenachse 10 axial versetzt zueinander angeordnet und an der Scherenachse 10 befestigt, vorzugsweise angeschweißt, sind und zwischen sich das Kugelgelenk 20 aufnehmen. Der Dämpfer 14 kann auch direkt an der Scherenachse 10 angelenkt sein. Das Kugelgelenk 20 sitzt somit in Sitzquerrichtung y in der Mitte zwischen den beiden Kreuzungspunkten der Schwingen 8.

### Bezugszeichenliste

- 1: Fahrzeugsitz
- 3: Scherengestell
- 5: Unterrahmen
- 7: Oberrahmen
- 8: Schwinge
- 10: Scherenachse
- 12: Feder
- 14: Dämpfer
- 15: Sitzschiene
- 16: Sitzrahmen
- 17: Lehne
- 20: Kugelgelenk
- 22: Reiter
- x: Sitzlängsrichtung
- y: Sitzquerrichtung
- z: Schwingungsrichtung

## Patentansprüche

1. Fahrzeugsitz, insbesondere Nutzfahrzeugsitz, mit einem schwingfähigen Scherengestell (3), das eine Feder (12), einen Dämpfer (14), welcher an zwei relativ zueinander beweglichen Teilen des Scherengestells (3) angebunden ist, und auf seinen beiden Längsseiten je ein Paar von Schwingen (8), welche sich an einer in Sitzquerrichtung (y) verlaufenden Scherenachse (10) kreuzen, aufweist, **dadurch gekennzeichnet, dass** der Dämpfer (14) kinetisch gelagert ist.

2. Fahrzeugsitz nach Anspruch 1, **dadurch gekennzeichnet, dass** der Dämpfer (14) mittels wenigstens eines Kugelgelenks (20) angelenkt ist.

3. Fahrzeugsitz nach Anspruch 2, **dadurch gekennzeichnet, dass** der Dämpfer (14) an beiden Enden mittels je eines Kugelgelenks (20) angelenkt ist.

4. Fahrzeugsitz nach einem der vorhergehenden Ansprüche, **dadurch gekennzeichnet, dass** der Dämpfer (14) in Sitzquerrichtung (y) mittig an den beiden Teilen des Scherengestells (3) angebunden ist.

5. Fahrzeugsitz nach einem der vorhergehenden Ansprüche, **dadurch gekennzeichnet, dass** der Dämpfer (14) in Sitzquerrichtung (y) mittig zwischen den beiden Längsseiten des Scherengestells (3) angeordnet ist.

6. Fahrzeugsitz nach einem der vorhergehenden Ansprüche, **dadurch gekennzeichnet, dass** der Dämpfer (14) in Sitzquerrichtung (y) mittig zwischen den Kreuzungspunkten der Schwingen (8) angeordnet und angebunden ist.

7. Fahrzeugsitz nach einem der vorhergehenden Ansprüche, **dadurch gekennzeichnet, dass** der Dämpfer (14) an den relativ zueinander beweglichen Teilen des Scherengestells (3) angelenkt ist, wobei die Anlenkstellen in Sitzquerrichtung (y) mittig zwischen den beiden Längsseiten des Scherengestells (3) angeordnet sind.

8. Fahrzeugsitz nach einem der vorhergehenden Ansprüche, **dadurch gekennzeichnet, dass** der Dämpfer (14) an einem Ende an der Scherenachse (10) angelenkt ist.

9. Fahrzeugsitz nach einem der vorhergehenden Ansprüche, **dadurch gekennzeichnet, dass** der Dämpfer (14) an einem Ende an einem Rahmen (5, 7) des Scherengestells (3) angelenkt ist.

10. Fahrzeugsitz nach Anspruch 9, **dadurch gekennzeichnet, dass** der Dämpfer (14) an einem in Sitzquerrichtung (y) verlaufenden Schenkel des Rahmens (5, 7) mittig angelenkt ist.

11. Fahrzeugsitz nach einem der vorhergehenden Ansprüche, **dadurch gekennzeichnet, dass** der Dämpfer (14) an einem Ende an der Scherenachse (10) mittig angelenkt ist.

12. Fahrzeugsitz nach Anspruch 11, **dadurch gekennzeichnet, dass** der Dämpfer (14) an einem Paar von Reitern (22) angelenkt ist, die auf der Scherenachse (10) axial versetzt zueinander angeordnet und an der Scherenachse (10) befestigt sind.
